# EUROPEAN PATENT SPECIFICATION

(11) **EP 0 874 303 B1**
(45) Date of publication and mention of the grant of the patent: **25.09.2002**
(21) Application number: 97400945.8
(22) Date of filing: 25.04.1997
(51) Int. Cl.: G06F 3/00

(54) **Video display system for displaying a virtual threedimensinal image**
Videoanzeigesystem zum Darstellen einer virtuellen dreidimensionalen Bildanzeige
Système de traitement de vidéo pour afficher une image virtuelle à trois dimensions

(43) Date of publication of application: 28.10.1998
(73) Proprietor: TEXAS INSTRUMENTS FRANCE, 06271 Villeneuve Loubet Cédex (FR); TEXAS INSTRUMENTS INCORPORATED, Dallas, Texas 75265 (US)
(72) Inventor: Leduc, Yves, Roquefort les Pins (FR)
(74) Representative: Jacobson, Claude

(56) References cited:
- DE-A- 4 207 284
- US-A- 5 574 836

## Description

### FIELD OF THE INVENTION

This invention relates to video display devices and systems for providing virtual three-dimensional images.

### BACKGROUND OF THE INVENTION

The video output of a computer system or video game is typically a two-dimensional image on a viewing device such as cathode ray tube (CRT) or flat panel display. Some video output devices provide an image which has resolution and colour content that is as good as a photograph, while other video output devices have lower resolutions or colour capabilities; however, the image is still two-dimensional.

Video images have been given an illusion of a third dimension in a number of ways in order to improve the perceived quality and realism of the 'image'. For example, in a computer system display using 'windows' and 'control buttons' within a user interface, a three dimensional effect can be made by providing shading on the edges of the window frames and buttons. This simple shading effect is static and does not create a very realistic" three dimensional display.

Various graphics system create a three dimensional effect by techniques such as "ray tracing' which attempts to account for various light sources and to simulate reflected light on the various reflective surfaces of a displayed object. In another technique, sometimes referred to as "z-buffering," the depth of various portions of a displayed object from an imaginary viewing plane are maintained. When several objects are displayed, the object or portion of object that is closest to the view plane is displayed and more distant objects are occluded by nearer objects. Likewise, distance perspective can be created based on the distance of portions of an object from the view plane.

More complex video display systems provide two slightly different source images, one for each eye of an observer, which allow an observer to mentally generate a three dimensional image in response to the two source images which provide a view of the displayed object from two slightly different aspects.

All of these techniques produce an image that is not affected by the position of the observer. By precisely tracking the position of an observer relative to a frame of reference, a video image can be created using ray tracing or z-buffering that is responsive to an action of the observer. However, such systems are complex and expensive.

Document US-A-574 836 relates to a system comprising a user view position sensing apparatus and a display monitor connected to a computer. A microprocessor in the computer calculates the new coordinates of an object to be displayed in response of the extent of the shift in the viewer's position determined by the sensing apparatus. These new coordinates are stored in a frame buffer unit and are then displayed on monitor. This system needs a calculation of at least a part of an image for every movement of the user detected.

An object of the present invention is to create a three dimensional video display which is responsive to an observer using simple, low cost techniques.

Other objects and advantages will be apparent to those of ordinary skill in the art having reference to the following figures and the specific description relating thereto.

One aspect of the invention is a video display system and a correspording displaying method as defined in independent claims 1 and 9.

### SUMMARY OF THE INVENTION

In general and in a form of the present invention a video display system for displaying a virtual three dimensional image is provided which comprises a video display device, a tracking device, and a control unit. The video display device is operable to display a video image under the direction of the control unit. The tracking device is operable to determine a position of an observer relevant to a viewing surface of the video display device. The control unit is operable to modify the video image that is displayed on the video display device in order that a virtual three dimensional image is formed by displaying various aspect views of the image in response to slight movements of the observer. The image is returned to a centered aspect when the observer stops moving so that only a small number of aspect views are required for each image.

Another form of the present invention is an article of manufacture comprising a non-volatile storage media having variations in a physical property of the storage media that define computer instructions or directions for displaying a three dimensional video image on a video display device while being viewed by an observer. The directions comprise the steps of; displaying a first aspect view of the video image; racking the observer's position relevant to a viewing surface of the video display device; determining an amount of movement from a first position of the observer to a second position of the observer; displaying a second aspect view of the video image if movement detected by the determining step exceeds a first amount threshold; repeating the tracking and determining steps; and returning the video image to the first aspect view if additional movement detected by the repeated determining step is less than the second amount threshold

Other embodiments of the present invention will be evident from the description and drawings.

### BRIEF DESCRIPTION OF THE DRAWINGS

Other features and advantages of the present invention will become apparent with reference to the following detailed description when considered in conjunction with the accompanying drawings, in which:
FIGURE 1A and 1B are a top and side view of a video display system with a tracking device for detecting the position of an observer, according to the present invention;
FIGURE 2 is a block diagram of the video display system of Figure 1;
FIGURE 3 is an illustration of a video display with a representative window based user interface;
FIGURE 4 is a representative window from Figure 3 illustrating virtual three dimensional enhancements for single axis motion according to the present invention;
FIGURE 5 is an illustration of the representative window of Figure 4 with virtual three dimensional enhancements for multi-axis motion according to the present invention;
FIGURES 6A-6B are representations of a video display object;
FIGURES 6C-D illustrate virtual three dimensional enhancements to the display object of Figure 6B for single axis motion according to the present invention;
FIGURE 7A is an illustration of a portion of a video image which is far from the observer,
FIGURES 7B-7D illustrate a composite video image formed by superimposing portions of an image from Figures 6B-6D which are near to the observer over the far portion of Figure 7A,
FIGURE 8A is an illustration of a simple tracking device, according to the present invention;
FIGURE 8B is an illustration of the tracking device of Figure 8A with an alternative lens;
FIGURE 9A illustrates an embodiment of the present invention in a hand-held game box;
FIGURE 9B illustrates an embodiment of the present invention in a lap-top computer; and
FIGURE 9C illustrates an embodiment of the present invention in a television.

Corresponding numerals and symbols in the different figures and tables refer to corresponding parts unless otherwise indicated.

### DETAILED DESCRIPTION OF EMBODIMENTS OF THE INVENTION

In a typical video display device, a two dimensional (2D) image is provided which is observed by an observer who is looking at the display device. The display may be providing a user interface for a computer program a game environment, a high resolution image, or any number of other images. In any case, the displayed image appears to the observer as a flat, two dimensional representation of whatever is being displayed. It has been discovered that by adding even simple three dimensional (3D) effects to a video display, the information content of the displayed image and the realism of the displayed image can be advantageously increased.

It is known that a person with only single eye vision can perceive 3D effects by small head movements. Likewise, a fully sighted person who covers one eye can differentiate a high quality photograph or movie from real 3D life. This is because movement of the head produces a small parallax effect which provides a queue from which an observer can discern information from a third dimension. It has now been discovered that this principal can be applied to a video display system to advantageously provide simple 3D effects.

According to the present invention, by tracking the head movement of an observer of a video display system, the video display system can enhance or recompute the displayed image in order to introduce a parallax effect which is then interpreted by the observer as 3D visual queues. Even simple three dimensional effects can significantly improve the perceived realism of an image; much as stereo sound, which is a crude imitation of 3D sound, is considered an improvement over monaural sound.

Aspects of the present invention include methods and apparatus for displaying a virtual three dimensional image. In the following description, specific information is set forth to provide a through understanding of the present invention. Well known circuits and devices are included in block diagram form in order not to complicate the description unnecessarily. Moreover, it will be apparent to one skilled in the art that specific details of these blocks are not required in order to practice the present invention.

Aspects of the present invention are described in the context of a personal computer that has a high resolution monitor for displaying virtual three dimensional video images. However, it will be appreciated by those skilled in the art that the teachings of the present invention can be incorporated into any system that displays video images.

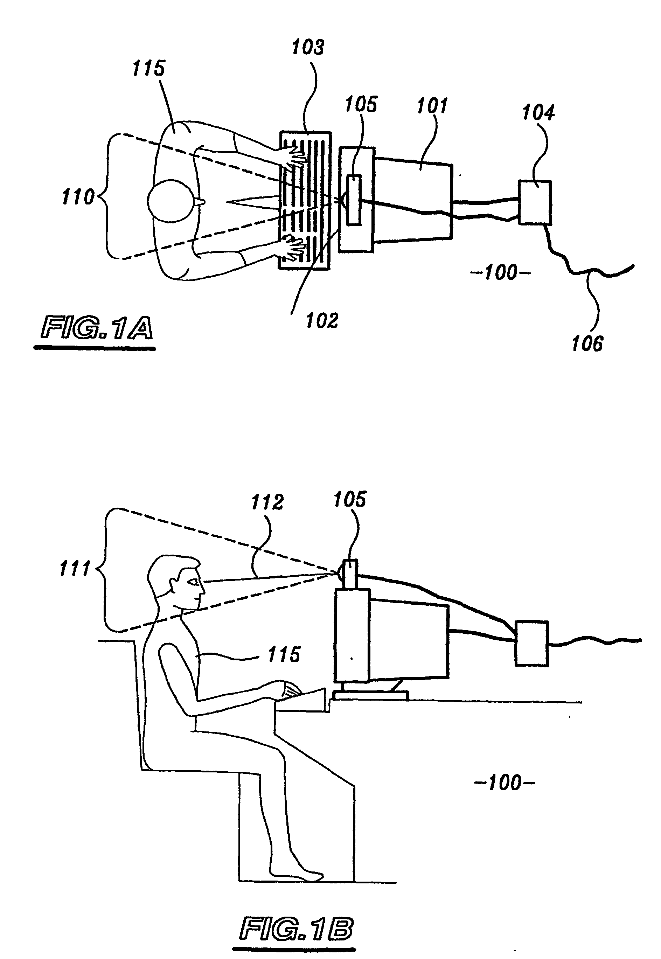

FIGURE 1A and 1B are a top and side view of a video display system with a tracking device for detecting the position of an observer, according to the present invention. Video display system 100 comprises video display device 101 which has a viewing surface 102, control unit 104, and tracking device 105. Video display device 101 is a standard computer monitor that is capable of displaying graphical video images. Tracking device 105 is a digital camera which has a horizontal field of view as indicated by dashed lines 110. Tracking device 105 also has a vertical field of view as indicated by dashed lines 111. Alternatively, tracking device 105 may have a very limited vertical field of view, such as a single horizontal plane 112.

Video display system 100 is configured so that an observer 115 who interacts with system 100 will normally be in the field of view 110-111 of tracking device 105. Preferably, the head of observer 115 is in the field of view of tracking device 105 so that tracking device 105 can determine the head position of observer 115 relative the viewing surface 102 of video device 101. However, in accordance with the present invention, movements of observer 115's upper torso which are correlated to movements of the head can also be used to form virtual three dimensional images.

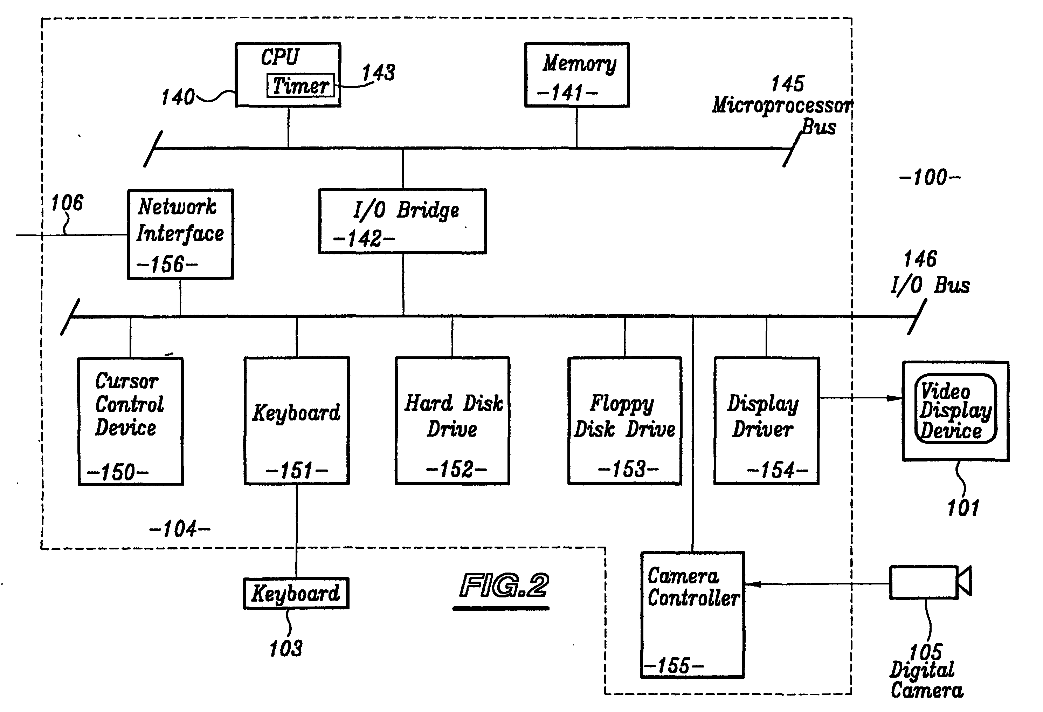

FIGURE 2 is a block diagram of the video display system which shows control unit 104 in more detail. Control unit 104 is a personal computer that is readily available from a number of sources. CPU 140 is coupled to memory 141 and I/O bridge 142. I/O bridge 142 interfaces to a several input/output devices via I/O bus 146. Cursor control 150 and keyboard control 151 provide input from the observer. Hard drive 152 and floppy drive 153 provide mass storage for video images or data to generate a video image. Network interface 156 interfaces to network cable 106 and provides a source of video images external to system 100. Display driver 154 drives video display device 101. Camera controller 155 interfaces tracking device 105 which is a digital camera. Camera controller 155 is a commonly available interface card which plugs into a connector on I/O bus 146.

Camera controller 155 is controlled by tracking software which is stored in memory 141 and executed by processor 140. Digital camera 105 is oriented so that it will capture a continuous stream of images of observer 115 as observer 115 interacts with system 100. As discussed above, camera 105 preferably captures images of the head of observer 115. The tracking software evaluates each image of observer 115 and determines a "position" of the observer relative to viewing surface 102 of video device 101. This position is representative of the position of the observers head, and is related to an identifiable feature, such as centre of mass, an edge, or some other distinctive feature. As each new image of observer 115 is received, tracking software determines a new position. By comparing positions, the tracking software determines an amount of movement that the observer 115 has made. Furthermore, by considering information from timer 143, the tracking software can determine a rate of motion of the, observer 115 relative to viewing surface 102.

In another embodiment of the present invention, tile tracking software is further capable of resolving the motion into a component which is horizontal with respect to an image displayed on viewing surface 102 and a component which is vertical with respect to an image displayed on viewing surface 102; both components of motion being in a plane generally parallel to viewing surface 102.

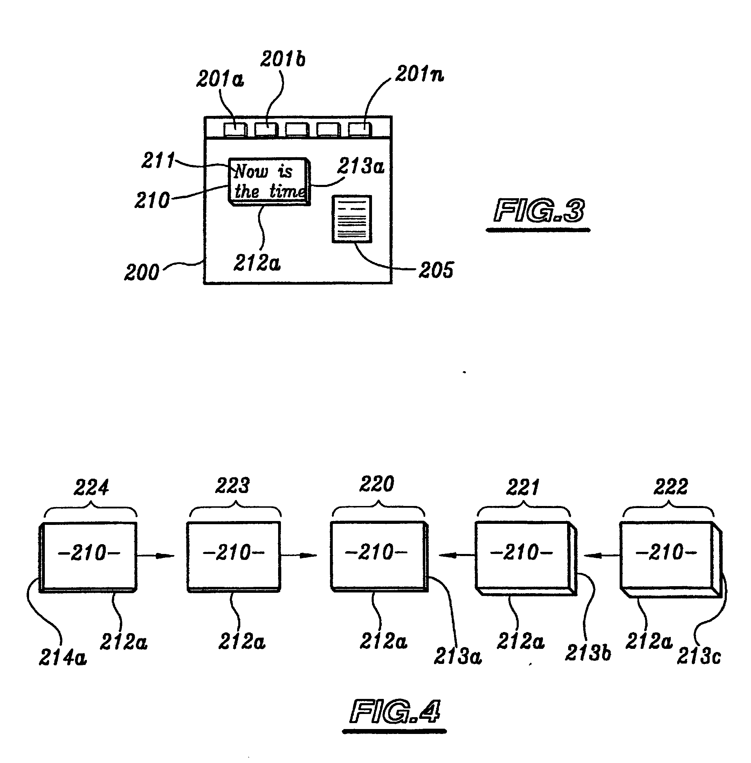

Figure 3 is an illustration of a video display with a representative window based user interface. Window frame 200 denotes the outer limit of a video image, and may cover the entire viewing surface of video display device 101, or there may be several window frames 200 displayed simultaneously on display device 101 in either an overlapping or a tiled manner. A typical user interface for a computer program such as a word processor or a spread sheet contains buttons, or menu pulldowns, 201a-201n. These buttons are "activated" by pointing and clicking via cursor control device 150. Window 210 is illustrated to have text 211, but may also have other elements such as a spread sheet, for example. Window 210 has shaded portions 212a and 213a to provide a third dimensional effect. Likewise, buttons 210a-n may have shadows. Another portion of the user interface is text region 205 which is not enclosed in a separate window.

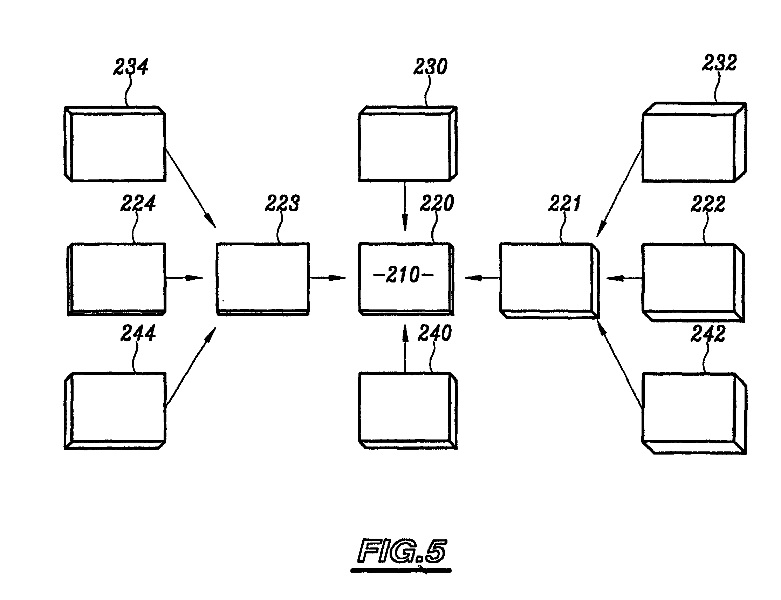

FIGURE 4 is a representative window from Figure 3 illustrating virtual three dimensional enhancements for single axis motion according to the present invention. Window 210 is modified according to an aspect of the present invention to create a three dimensional effect by varying the size of shaded portions 212a and 213a in response to movement of an observer. It should be noted that several of the objects in a user interface are modified in this manner, such as buttons 201a-n, but for simplicity only window 210 will be discussed in the following description of how the display is varied in response to user movement.

While observer 115 interacts with system 100, the position of observer 115 is determined, as discussed previously. When window 210 is first displayed it has shadows 212a and 213a which define a view from a specific aspect 220 and the observer 115 infers that window 210 is some distance above a plane formed by window frame 200. When observer 115 moves to the right, more of the background behind the right edge of window 210 would be visible in a true three dimensional display. According to an aspect of the present invention, when control unit 104 determines that observer 115 has moved to the right, a slightly different aspect view of window 210 is displayed, namely right aspect view 222 which conveys a different aspect view by having shadow 213c enlarged.

According to another aspect of the present invention, once observer 115 stops moving to the right or when the movement of the observer is below a selected threshold amount, then control unit 104 gradually returns the view back to aspect 220. This is to keep the aspect "centered" so that a large number of views are not required. Preferably, this change should be imperceptible to user 115 by passing through intermediate steps, such as aspect view 221 in which shadow 213b is slightly narrower than shadow 213c. For simplicity, only a single intermediate view is illustrated; however, more than one view may be required in order to make a smooth transition back to aspect view 220.

According to another aspect of the present invention, control unit 104 determines the rate of movement of observer 115. If observer 115 moves quickly, then the display transitions directly from aspect view 220 to aspect view 222. However, if observer 115 moves slowly, then one or more intermediate aspect views are displayed, such as aspect view 221, in order to make a smooth transition that follows the movement of observer 115.

In order to minimize complexity, only a limited number of aspect views are provided. Thus, if observer 115 moves a very small amount, then no change in view is made. If observer 115 moves an amount that exceeds a predetermined threshold amount, such as 1cm for example, then aspect view 222 is displayed. Additional aspect views may be displayed for larger amounts of motion, but according to the present invention, even a small number of views that are displayed in response to movement of the observer provide a significant increase in the realism of the video image. By always re-centering the aspect, as discussed above, the illusion of motion is conveyed to the observer without requiring a large number of aspect views. For example, observer 115 moves 1 cm to the right and perceives motion of the image as the image transitions from aspect view 220 to aspect view 222. The image is then gradually re-centered by displaying aspect view 221 and finally aspect view 220. Then, if observer 115 moves another 1 cm to the right, the same sequence is repeated and observer 115 again perceives motion of the image without an additional aspect view beyond aspect view 222.

Likewise, if observer 115 moves to the left, a view with an aspect from the left is displayed with left aspect view 224 having shadow 214a on the left edge, followed by a gradual re-centering by displaying intermediate view 223 and then original view 220.

FIGURE 5 is an illustration of the representative window of Figure 4 with virtual three dimensional enhancements for multi-axis motion according to the present invention. As discussed above, in one embodiment of the present invention control unit 104 includes software which resolves motion of the observer 115 relative to the viewing surface of display device 101 in two dimensions, namely horizontal and vertical. In this embodiment, greater realism is imparted to the video image by adding upper and lower aspect views, in addition to the left and right aspect views discussed above with regard to Figure 4. In Figure 5, window 210 has a centered aspect view 220 that is displayed initially. As discussed above, right aspect view 222 is displayed if observer 115 moves to the right; left aspect view 224 is displayed if observer 115 moves to the left.

If observer 115 moves up by an amount that exceeds a selected threshold amount, then upper aspect view 230 is displayed. As before, the view is gradually centered once observer 115 stops moving by returning to centered aspect view 220. If observer moves up and to the right, then upper-right aspect view 232 is displayed. After observer 115 stops moving, the display is centered by displaying intermediate view 221 and then centered aspect view 220. As discussed previously, additional intermediate views may be provided in order to make the process of re-centering the view less perceptible to observer 115. Also, additional upper aspect views may be provided to cover a wider range of motion. Also, additional intermediate views may be provided for display before upper aspect view 230 or 232 if a slow rate of motion is detected by control unit 104.

Likewise, if the observer 115 moves up and to the left, upper-left aspect view 234 is displayed. If the observer 115 moves down, lower aspect view 240 is displayed. If the observer 115 moves down and to the right, then lower-right aspect view 242 is displayed. If the observer 115 moves down and to the left, then lower-left aspect view 244 is displayed. In all cases, once observer 115 stops moving, the view is gradually re-centered so the centered aspect view 220 is gradually redisplayed.

Another aspect of the present invention is portions of the video image can remain fixed, such as text field 205. In other words, the video image can be divided into two or more portions, or fields. A background field contains objects such as text field 205 that are considered to be far enough away from observer 115 that small movements by observer 115 would not result in significant aspect changes in a three dimensional image. A foreground field contains objects such as window 210 and buttons 201a-n which do change aspect in response to movement by observer 115.

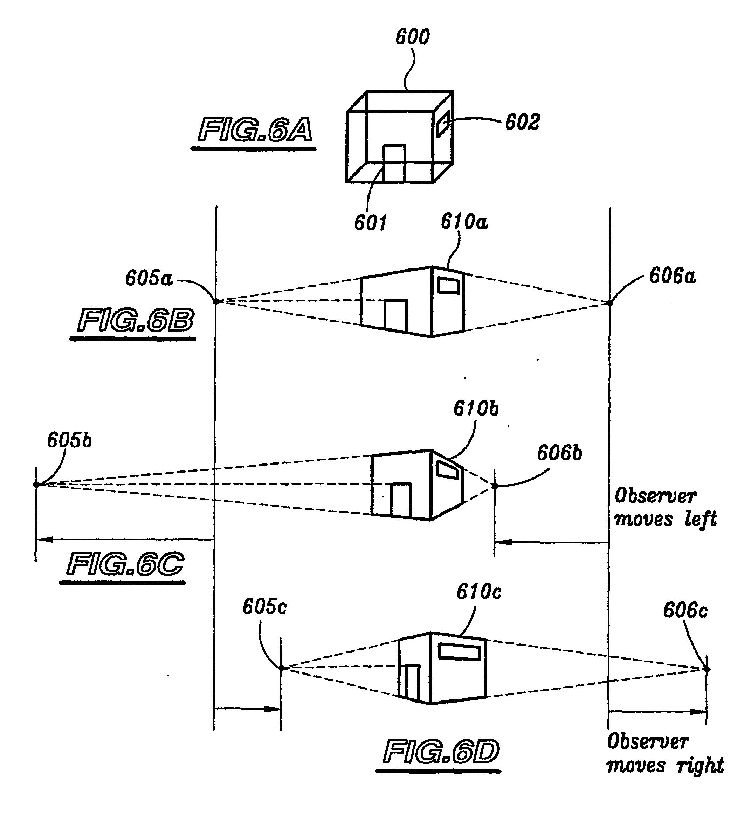

Figures 3-5 illustrate video images that represent a user interface for a computer application program. Other types of video images may be more appropriate for other applications, such as games, in which scenery or other types of graphical images are provided. FIGURE 6A is a representation of a video display object, such as a cubic structure 600 which is formed by object rendering software included in control unit 104. Such a cube is enhanced with a door 601 and a window 602 to represent a building. A building image formed in this manner is then displayed on display unit 101 as shown in Figure 6B. Vanishing points 605a and 606a are used to form perspective view 610a using known techniques of perspective to impart a realistic two dimensional view of building 610a.

FIGURES 6C-D illustrate virtual three dimensional enhancements for single axis motion according to the present invention. When observer 115 moves to the left, this movement is detected by control unit 104. The amount of movement detected by control unit 104 is provided to the rendering software which modifies the location of vanishing points 605b and 606b in response to the amount of detected motion. The rendering software then forms a left aspect view 610b of the display object. Observer 115 perceives this modified aspect view as a three dimensional image. As discussed with regard to Figures 3-4, once the motion of observer 115 stops, control unit 104 gradually re-centers the view by redisplaying centered aspect view 610a. One or more intermediate aspect views are preferably displayed in order to make the transition back to centered aspect view 610a imperceptible to observer 115.

Likewise, when observer 115 moves to the right, this movement is detected by control unit 104. The amount of movement detected by control unit 104 is provided to the rendering software which modifies the location of vanishing points 605e and 606c in response to the amount of detected motion. The rendering software then forms a right aspect view 610c of the display object. Observer 115 perceives this modified aspect view as a three dimensional image. As discussed with regard to Figures 3-4, once the motion of observer 115 stops, control unit 104 gradually re-centers the view by redisplaying centered aspect view 610a. One or more intermediate aspect views are preferably displayed in order to make the transition back to centered aspect view 610a imperceptible to observer 115.

As discussed with regard to Figure 5, in an embodiment of the present invention, aspect views for movement by the observer 115 which is vertical with respect to view 610a are formed by shifting vanishing points 605a and 606a up or down, corresponding to the movement, and recomputing video object 610. Again, once observer 115 stops moving, control unit 104 gradually re-centers the view by redisplaying centered aspect view 610a. One or more intermediate aspect views are preferably displayed in order to make the transition back to centered aspect view 610a imperceptible to observer 115.

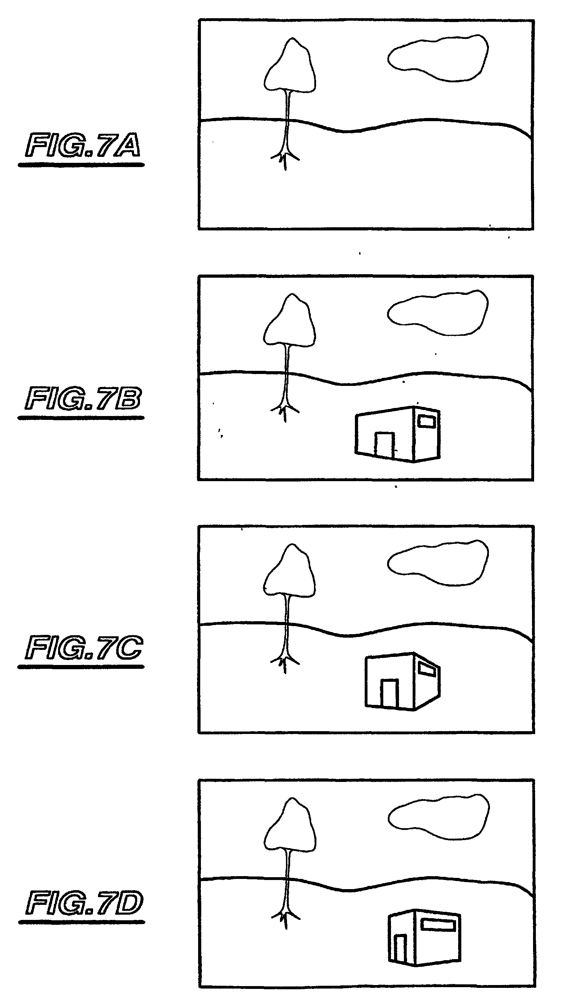

As discussed with regard to the user interface of Figures 3-4, a video image which includes graphical objects such as illustrated in Figures 6B-6D may be divided into two or more regions such as a foreground image and a background image. FIGURE 7A is an illustration of a portion of a video image that is far from the observer and is considered a background image. Since this portion of the image represents objects that are far from the observer, no aspect change is needed when observer 115 moves. Aspect changes are then restricted to foreground images in order to minimize image computation loads on control unit 104.

FIGURES 7B-7D illustrate a composite video image formed by superimposing the portions of an image from Figures 6B-6D which are near to the observer 115 over the far portion of Figure 7A. The foreground images of Figures 7B-7D are displayed with aspect views in response to movement by observer 115, while the background image is not changed.

According to an aspect of the present invention, detecting movement of the head of observer 115 is important, but the absolute position of observer 115 is not critical to the operation of the invention. The idea is to provide a feeling of three dimensions. A small move should trigger a slight change in the parallax of the displayed image, but a large change in the parallax is not needed. The speed of the movement is important, thus the rate of movement should be determined by control unit 104. Thus, a high resolution tracking device 105 is not necessary. FIGURE 8A is an illustration of a simple tracking device, according to the present invention. Tracking device 805 comprises a single row of charge coupled devices (CCD) 821a-e in CCD unit 820 and a lens 822. Tracking device 805 is mounted in a horizontal manner with respect to viewing surface 102 of Figure 1 such that an image of the head of observer 115 is projected by lens 822 onto the row of CCDs. Known interface circuitry then communicates which CCDs are activated by the image of observer's head and software executed within control unit 104 can then determine a relative horizontal position of the head of observer 115.

For simplicity, only five CCD elements 821a-e are illustrated. Preferably, at least 20 elements are included in CCD unit 820. When observer 115 is in position 115a, an image of observer 115 is projected along ray 116a through lens 822 and onto CCD 821c. If observer 115 moves to position 115b, an image is projected along ray 116b through lens 822 and onto CCDs 821a and 821b. As discussed above, software within control unit 104 can determine an amount of movement by first detecting that CCD 821c is active and then later detecting that CCDs 821a and 821C are active.

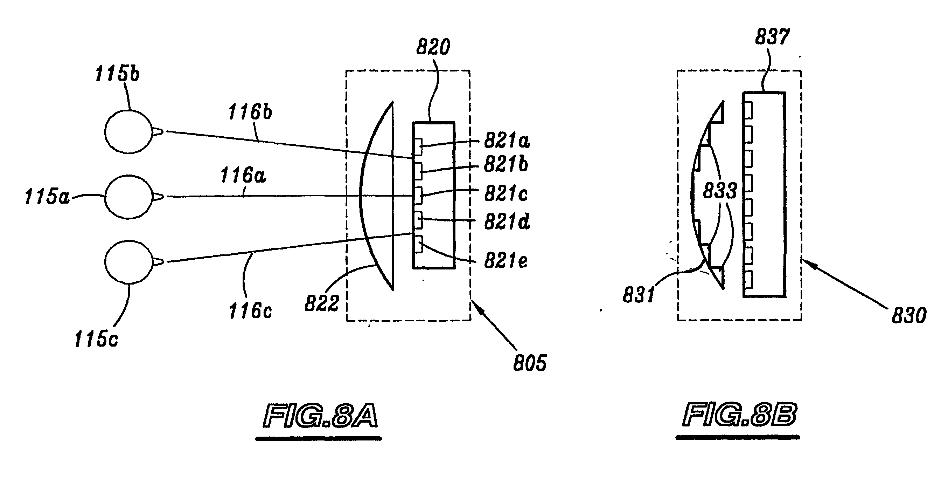

FIGURE 8B is an illustration of the tracking device of Figure 8A with an alternative lens 831. Lens 822 is a solid lens with one convex surface. Lens 831 can be a flexible element which is formed so that flat surfaces 833 are approximately parallel to CCD unit 832.

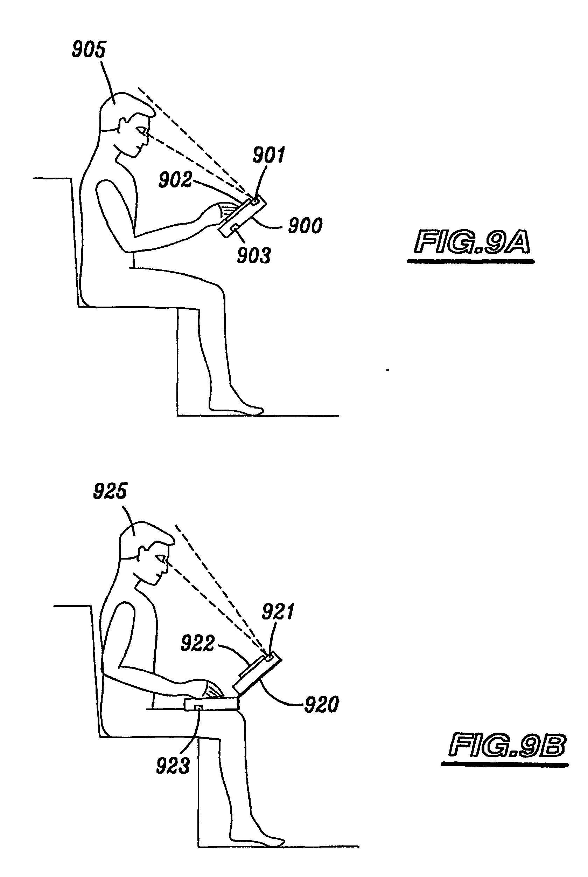

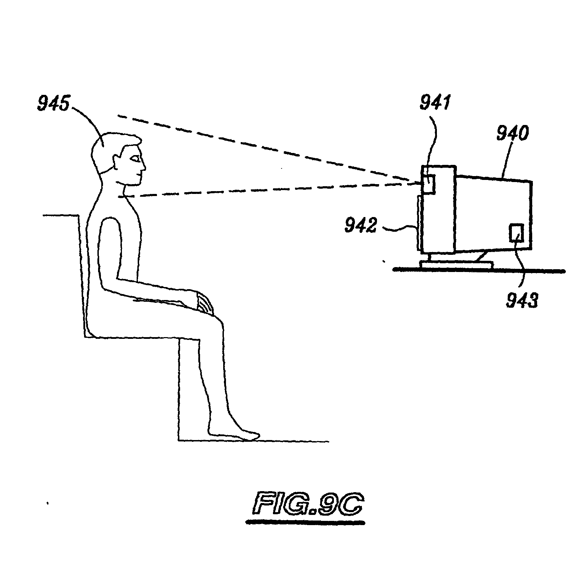

FIGURE 9A illustrates an embodiment of the present invention in a hand-held game box. Game box 900 is a portable enclosure which contains tracking device 901, viewing surface 902 and control unit 903. Tracking device 901 is arranged so that an image of the head of observer 905 will be tracked while observer 905 interacts with the game box. Tracker 901 will detect changes in the relative position of observer 905 which result from movements of the head of observer 905 or from movement of game box 900. Images displayed on viewing surface 902 will be displayed under control of control unit 903 as virtual three dimensional images which respond to relative movement between observer 905 and game box 900.

FIGURE 9B illustrates an embodiment of the present invention in a lap-top computer. Lap-top computer 920 is a portable enclosure which contains tracking device 921, viewing surface 922 and control unit 923. Tracking device 921 is arranged so that an image of the head of observer 925 will be tracked while observer 925 interacts with the lap-top computer. Tracking device 921 will detect changes in the relative position of observer 925 which result from movements of the head of observer 925 or from movement of lap-top computer 920. Images displayed on viewing surface 922 will be displayed under control of control unit 923 as virtual three dimensional images which respond to relative movement between observer 925 and lap-top computer 920.

FIGURE 9C illustrates an embodiment of the present invention in a television. Television 940 is a portable enclosure that contains tracking device 941, viewing surface 942 and control unit 943. Tracking device 941 is arranged so that an image of the head of observer 945 will be tracked while observer 945 observes the television. Tracking device 941 will detect changes in the relative position of observer 945 which result from movements of the head of observer 945. Images displayed on viewing surface 942 will be displayed under control of control unit 943 as virtual three dimensional images which respond to movements of observer 945.

In another embodiment of the present invention, an image is sent to video display system 100 from an external source via an interface such as network interface 156 in Figure 2. A centered aspect image is sent along with various other aspect images and stored in mass storage unit 152. CPU 143 selects various aspect images for display on display device 101 in response to movement of observer 115 which is detected by tracking device 105. The various other aspect images may be complete images or they may be only fore ground portions of the centered aspect image. The images may be transferred in compressed form, using a compression technique such as JPEG or MPEG.

In various embodiments of the present invention, aspect images may be stored in RAM, ROM, on a hard disk drive, on a floppy disc, on a CD or in any other type of mass storage that is associated with video display system 100.

In various embodiments of the present invention, aspect views may be stored as uncompressed images, compressed images, differences between images, or in other formats. Alternatively, aspect views may be computed on demand based on vector object lists, or other forms of object representations. Z-buffering can be incorporated for determining hidden surfaces.

In various embodiments of the present invention, an aspect view may affect an entire image or the image can be divided into two or more portions such as a foreground and a background. Advantageously, only the foreground image need be changed to provide an illusion of three dimensions.

Various combinations of the above can be advantageously made in order to optimize cost and performance.

Another advantage of the present invention is that by continually re-centering the aspect view, only a small number of aspect views are required for each image.

Another advantage of the present invention is that only relative head motion of an observer needs to be determined, not exact position. Therefore, a simple low cost tracking device is sufficient.

Another advantage of the present invention is that it can be applied to both still images and to moving images and is therefore applicable to video display systems such as computers, game boxes and televisions, for example.

As used herein, the terms "applied," "connected," and "connection" mean connected for data communication, including where additional elements may be included in the data communication path.

While the invention has been described with reference to illustrative embodiments, this description is not intended to be construed in a limiting sense. Various other embodiments of the invention will be apparent to persons skilled in the art upon reference to this description.

## Claims

1. A video display system for displaying a virtual three dimensional image, comprising :
a video display device (101) operable to display a video image;
a tracking device (105;805) operable to determine the position of an observer (115), relative to a viewing surface (102) of said video display device (101);
a control unit (104) operable to modify said video image such that a virtual three dimensional image is formed by displaying a first aspect view of said video image on said video device (101);
means for determining an amount of movement from a first position of said observer (115) to a second position of said observer responsive to said tracking device (105 ; 805), **characterised in that** it further comprises :
means for displaying a second aspect view of said video image if movement detected by said determining means exceeds a first amount threshold;
returning said video image to said first aspect view if additional movement determined in response to said tracking unit (105) is less than said second amount threshold.

2. The video display system of claim 1, wherein said control unit (104) is operable to determine a rate of movement from said first position to said second position of said observer relative to said viewing surface of said video display device in response to said tracking device; and
said control unit (104) is operable to modify said video image by displaying at least one intermediate aspect view before displaying said second aspect view when said rate of movement is greater than a first rate threshold.

3. The video display system of claim 1 or claim 2, wherein said control unit (104) is operable to return said video image to said first aspect view by first displaying at least one intermediate aspect view, whereby said video image changes gradually from said second aspect view to said first aspect view.

4. The video display system of any preceding claim, further comprising :
an instruction processing device (143) within said control unit (104);
a software program running on said instruction processing device such that said control unit (104) modifies said video image in response to said software program.

5. The video display system of any preceding claim, further comprising a portable enclosure (900;920;940) containing said video display device (902;922;942), said tracking device (901;921;941) and said control unit (903;923;943).

6. The video display system of claim 5, wherein said video display system is a lap-top computer (920).

7. The video display system of claim 5, wherein said video display system is a video game box (900).

8. The video display system of claim 5, wherein said video display system is a television (940).

9. A method for displaying a virtual three dimensional video image comprising :
displaying a first aspect view of said video image;
tracking the position of an observer relative to a viewing surface of said video display device;
determining an amount of movement from a first position of said observer to a second position of said observer, **characterised in that** it further comprises :
displaying a second aspect view of said video image if movement detected by said determining step exceeds a first amount threshold;
repeating said tracking and determining steps, and
returning said video image to said first aspect view if additional movement detected by said repeated determining step is less than said second amount threshold.

10. The method of claim 9, further comprising :
determining a rate of movement of said observer from said first position to said second position;
displaying at least one intermediate aspect view before displaying said second aspect view if said rate of movement exceeds a first rate threshold.

11. The method of claim 9 or claim 10, wherein the step of returning further comprises displaying at least one intermediate aspect view before displaying said first aspect view, whereby said video image changes gradually from said second aspect view to said first aspect view.

12. The method of any of claims 9 to 11 wherein :
the step of tracking further comprises tracking the position of the observer in at least two dimensions;
the step of determining an amount of movement further comprises determining an amount of movement in at least a first axis and a second axis; and
the step of displaying said video image with a second aspect view further comprises selecting said second aspect view relative to said amount of movement in said first axis and said second axis.

13. The method of any of claims 9 to 12, further comprising :
forming a plurality of aspect views of said video image prior to displaying said first aspect view; and
storing said plurality of aspect views.

14. The method of claim 13, wherein the step of displaying a second aspect view further comprises selecting said second aspect view from said plurality of stored aspect views.

15. The method of claim 14, wherein the step of forming a plurality of aspect views further comprises :
separating said video image into at least two portions comprising a near portion and a far portion; and
forming a plurality of near portion aspect views and one far portion aspect view.

16. The method of claim 15, wherein :
the step of displaying a first aspect view further comprises forming said first aspect view by combining said far portion aspect view with a first near portion aspect view; and
the step of displaying a second aspect view further comprises forming said second aspect view by combining said far portion aspect view with a second near portion aspect view.

17. The method of any of claims 14 to 16, wherein at least one of said plurality of aspect views is stored in a compressed format.

18. The method of any of claims 13 to 17, wherein the step of displaying a second aspect view further comprises computing at least a portion of said second aspect view in response to said amount of movement from said step of determining an amount of movement, said step of computing being performed after said step of displaying a first aspect view.

19. A non-volatile storage media having variations in a physical property of said storage media that define instructions or directions for displaying a virtual three dimensional video image comprising :
means for displaying a first aspect view of a video image;
means for tracking an observer's (115) position relative to a viewing surface of said video display device (101);
means for determining an amount of movement from a first position of said observer to a second position of said observer (115);
**characterised in that** it further comprises :
means for displaying a second aspect view of said video image if movement detected by said determining step exceeds a first amount threshold;
means for repeating said tracking and determining steps; and
means for returning said video image to said first aspect view if additional movement detected by said repeated determining step is less than said second amount threshold.

## Patentansprüche

1. Videoanzeigesystem zum Anzeigen eines virtuellen dreidimensionalen Bildes, mit:
einer Videoanzeigevorrichtung (101), die so betreibbar ist, daß sie ein Videobild anzeigt;
einer Verfolgungsvorrichtung (105; 805), die so betreibbar ist, daß sie die Position eines Betrachters (115) relativ zu einer Betrachtungsfläche (102) der Videoanzeigevorrichtung (101) bestimmt;
einer Steuereinheit (104), die so betreibbar ist, daß sie das Videobild in der Weise modifiziert, daß ein virtuelles dreidimensionales Bild erzeugt wird, indem auf der Videovorrichtung (101) eine erste Aspektansicht des Videobildes angezeigt wird;
Mitteln, die in Reaktion auf die Verfolgungsvorrichtung (105; 805) den Betrag einer Bewegung des Betrachters (115) aus einer ersten Position in eine zweite Position bestimmen, **dadurch gekennzeichnet, daß** es ferner umfaßt:
Mittel, die eine zweite Aspektansicht des Videobildes anzeigen, falls die durch die Bestimmungsmittel erfaßte Bewegung eine erste Betragsschwelle übersteigt;
wobei das Videobild zu der ersten Aspektansicht zurückgestellt wird, falls eine in Reaktion auf die Verfolgungseinheit (105) bestimmte zusätzliche Bewegung geringer als eine zweite Betragsschwelle ist.

2. Videoanzeigesystem nach Anspruch 1, bei dem die Steuereinheit (104) so betreibbar ist, daß sie in Reaktion auf die Verfolgungsvorrichtung die Geschwindigkeit der Bewegung des Betrachters aus der ersten Position in die zweite Position relativ zu der Betrachtungsfläche der Videoanzeigevorrichtung bestimmt; und
die Steuereinheit (104) so betreibbar ist, daß sie das Videobild modifiziert, indem sie wenigstens eine Zwischenaspektansicht anzeigt, bevor sie die zweite Aspektansicht anzeigt, wenn die Geschwindigkeit der Bewegung größer als eine erste Geschwindigkeitsschwelle ist.

3. Videoanzeigesystem nach Anspruch 1 oder Anspruch 2, bei dem die Steuereinheit (104) so betreibbar ist, daß sie das Videobild zu der ersten Aspektansicht zurückstellt, indem sie zuerst wenigstens eine Zwischenaspektansicht anzeigt, wodurch sich das Videobild allmählich von der zweiten Aspektansicht zur ersten Aspektansicht ändert.

4. Videoanzeigesystem nach einem vorhergehenden Anspruch, das ferner umfaßt:
eine Befehlsverarbeitungsvorrichtung (143) in der Steuereinheit (104);
ein Software-Programm, das in der Befehlsverarbeitungsvorrichtung abläuft, derart, daß die Steuereinheit (104) in Reaktion auf das Software-Programm das Videobild modifiziert.

5. Videoanzeigesystem nach einem vorhergehenden Anspruch, das ferner ein tragbares Gehäuse (900; 920; 940) umfaßt, das die Videoanzeigevorrichtung (902; 922; 942), die Verfolgungsvorrichtung (901; 921; 941) und die Steuereinheit (903; 923; 943) enthält.

6. Videoanzeigesystem nach Anspruch 5, wobei das Videoanzeigesystem ein Laptop-Computer (920) ist.

7. Videoanzeigesystem nach Anspruch 5, wobei das Videoanzeigesystem eine Videospiel-Box (900) ist.

8. Videoanzeigesystem nach Anspruch 5, wobei das Videoanzeigesystem ein Fernsehgerät (940) ist.

9. Verfahren zum Anzeigen eines virtuellen dreidimensionalen Videobildes, bei dem:
eine erste Aspektansicht des Videobildes angezeigt wird;
die Position eines Betrachters relativ zu einer Betrachtungsfläche der Videoanzeigevorrichtung verfolgt wird;
der Betrag der Bewegung des Betrachters aus einer ersten Position in eine zweite Position bestimmt wird, **dadurch gekennzeichnet, daß** ferner:
eine zweite Aspektansicht des Videobildes angezeigt wird, falls die im Bestimmungsschritt erfaßte Bewegung eine erste Betragsschwelle übersteigt;
die Verfolgungs- und Bestimmungsschritte wiederholt werden und
das Videobild zu der ersten Aspektansicht zurückgestellt wird, falls die durch den wiederholten Bestimmungsschritt erfaßte zusätzliche Bewegung kleiner als eine zweite Betragsschwelle ist.

10. Verfahren nach Anspruch 9, bei dem ferner:
die Geschwindigkeit der Bewegung des Betrachters aus der ersten Position in die zweite Position bestimmt wird;
wenigstens eine Zwischenaspektansicht angezeigt wird, bevor die zweite Aspektansicht angezeigt wird, falls die Geschwindigkeit der Bewegung eine erste Geschwindigkeitsschwelle übersteigt.

11. Verfahren nach Anspruch 9 oder Anspruch 10, bei dem bei dem Rückstellschritt ferner wenigstens eine Zwischenaspektansicht angezeigt wird, bevor die erste Aspektansicht angezeigt wird, wobei sich das Videobild allmählich von der zweiten Aspektansicht zu der ersten Aspektansicht ändert.

12. Verfahren nach einem der Ansprüche 9 bis 11, bei dem:
bei dem Verfolgungsschritt ferner die Position des Betrachters in wenigstens zwei Dimensionen verfolgt wird;
bei dem Schritt, bei dem ein Bewegungsbetrag bestimmt wird, ferner ein Bewegungsbetrag wenigstens längs einer ersten Achse und längs einer zweiten Achse bestimmt wird; und
bei dem Schritt, bei dem das Videobild mit einer zweiten Aspektansicht angezeigt wird, ferner die zweite Aspektansicht relativ zu dem Bewegungsbetrag längs der ersten Achse und längs der zweiten Achse ausgewählt wird.

13. Verfahren nach einem der Ansprüche 9 bis 12, bei dem ferner:
vor der Anzeige der ersten Aspektansicht mehrere Aspektansichten des Videobildes erzeugt werden; und
die mehreren Aspektansichten gespeichert werden.

14. Verfahren nach Anspruch 13, bei dem ferner bei dem Schritt, bei dem die zweite Aspektansicht angezeigt wird, die zweite Aspektansicht aus den mehreren gespeicherten Aspektansichten ausgewählt wird.

15. Verfahren nach Anspruch 14, bei dem ferner bei dem Schritt, bei dem mehrere Aspektansichten erzeugt werden:
die Videobilder in wenigstens zwei Abschnitte, die einen nahen Abschnitt und einen fernen Abschnitt umfassen, getrennt werden; und
mehrere Nahabschnitt-Aspektansichten und eine Fernabschnitt-Aspektansicht erzeugt werden.

16. Verfahren nach Anspruch 15, bei dem ferner:
bei dem Schritt, bei dem eine erste Aspektansicht angezeigt wird, die erste Aspektansicht durch Kombinieren der Fernabschnitt-Aspektansicht mit einer ersten Nahabschnitt-Aspektansicht erzeugt wird; und
bei dem Schritt, bei dem eine zweite Aspektansicht angezeigt wird, die zweite Aspektansicht durch Kombinieren der Fernabschnitt-Aspektansicht mit einer zweiten Nahabschnitt-Aspektansicht erzeugt wird.

17. Verfahren nach einem der Ansprüche 14 bis 16, bei dem wenigstens eine der mehreren Aspektansichten in einem komprimierten Format gespeichert wird.

18. Verfahren nach einem der Ansprüche 13 bis 17, bei dem ferner bei dem Schritt, bei dem eine zweite Aspektansicht angezeigt wird, in Reaktion auf den Bewegungsbetrag, der sich aus dem Bewegungsbetrag-Bestimmungsschritt ergibt, wenigstens ein Abschnitt der zweiten Aspektansicht berechnet wird, wobei der Berechnungsschritt nach dem Schritt, bei dem die erste Aspektansicht angezeigt wird, ausgeführt wird.

19. Nichtflüchtiges Speichermedium, das Änderungen einer physikalischen Eigenschaft des Speichermediums aufweist, die Befehle oder Richtungen zum Anzeigen eines virtuellen dreidimensionalen Videobildes definieren, mit:
Mitteln, die eine erste Aspektansicht eines Videobildes anzeigen;
Mitteln, die die Position eines Betrachters (115) relativ zu einer Betrachtungsfläche der Videoanzeigevorrichtung (101) verfolgen; und
Mitteln, die einen Betrag der Bewegung des Betrachters (115) aus einer ersten Position in eine zweite Position bestimmen;
**dadurch gekennzeichnet, daß** es ferner umfaßt:
Mittel, die eine zweite Aspektansicht des Videobildes anzeigen, falls die in dem Bestimmungsschritt erfaßte Bewegung eine erste Betragsschwelle übersteigt;
Mittel, die die Verfolgungs- und Bestimmungsschritte wiederholen; und
Mittel, die das Videobild zu der ersten Aspektansicht zurückstellen, falls eine durch den wiederholten Bestimmungsschritt erfaßte zusätzliche Bewegung kleiner als eine zweite Betragsschwelle ist.

## Revendications

1. Système d'affichage de vidéo pour afficher une image virtuelle en trois dimensions, comprenant :
un dispositif d'affichage vidéo (101) utilisable pour afficher une image vidéo;
un dispositif de pistage (105; 805) utilisable pour déterminer la position d'un observateur (115), par rapport à une surface de visualisation (102) dudit dispositif d'affichage vidéo (101);
une unité de commande (104) utilisable pour modifier ladite image vidéo de telle manière qu'une image virtuelle en trois dimensions soit formée en affichant une première vue d'apparence de ladite image vidéo sur ledit dispositif vidéo (101);
des moyens pour déterminer une amplitude de mouvement d'une première position dudit observateur (115) à une seconde position dudit observateur en réponse audit dispositif de pistage (105; 805), **caractérisé en ce qu'**il comprend en outre :
des moyens pour afficher une seconde vue d'apparence de ladite image vidéo si le mouvement détecté par lesdits moyens de détermination dépasse un premier seuil d'amplitude;
en ramenant ladite image vidéo à la première vue d'apparence si le mouvement additionnel déterminé en réponse à ladite unité de pistage (105) est inférieur audit second seuil d'amplitude.

2. Système d'affichage de vidéo selon la revendication 1, dans lequel ladite unité de commande (104) est utilisable pour déterminer une vitesse de mouvement de ladite première position à ladite seconde position dudit observateur par rapport à ladite surface de visualisation dudit dispositif d'affichage vidéo en réponse audit dispositif de pistage; et
ladite unité de commande (104) étant utilisable pour modifier ladite image vidéo en affichant au moins une vue d'apparence intermédiaire avant d'afficher ladite seconde vue d'apparence quand la vitesse de mouvement est supérieure à un premier seuil de vitesse.

3. Système d'affichage de vidéo selon la revendication 1 ou 2, dans lequel ladite unité de commande (104) est utilisable pour ramener ladite image vidéo à la première vue d'apparence en affichant d'abord au moins une vue d'apparence intermédiaire, de telle manière que l'image vidéo passe progressivement de ladite seconde vue d'apparence à ladite première vue d'apparence.

4. Système d'affichage de vidéo selon l'une quelconque des revendications précédentes, comprenant en outre :
un dispositif de traitement d'instructions (143) à l'intérieur de ladite unité de commande (104);
un programme de logiciel exécuté sur ledit dispositif de traitement d'instructions de telle manière que ladite unité de commande (104) modifie ladite image vidéo en réponse audit programme de logiciel.

5. Système d'affichage de vidéo selon l'une quelconque des revendications précédentes, comprenant en outre une enceinte portable (900; 920; 940) contenant ledit dispositif d'affichage vidéo (902; 922; 942), ledit dispositif de pistage (901; 921; 941) et ladite unité de commande (903; 923; 943).

6. Système d'affichage de vidéo selon la revendication 5, dans lequel ledit système d'affichage de vidéo est un ordinateur portable (920).

7. Système d'affichage de vidéo selon la revendication 5, dans lequel ledit système d'affichage de vidéo est une boîte de jeux vidéos (900).

8. Système d'affichage de vidéo selon la revendication 5, dans lequel ledit système d'affichage de vidéo est une télévision (940).

9. Procédé pour afficher une image vidéo virtuelle en trois dimensions comprenant :
l'affichage d'une première vue d'apparence de ladite image vidéo;
le pistage de la position d'un observateur par rapport à une surface de visualisation dudit dispositif d'affichage vidéo;
la détermination d'une amplitude de mouvement d'une première position dudit observateur à une seconde position dudit observateur, **caractérisé en ce qu'**il comprend en outre :
l'affichage d'une seconde vue d'apparence de ladite image vidéo si le mouvement détecté dans l'étape de détermination dépasse un premier seuil d'amplitude;
la répétition desdites phases de pistage et de détermination, et
le retour de ladite image vidéo à ladite première vue d'apparence si le mouvement additionnel détecté par ladite étape de détermination répétée est inférieur audit second seuil d'amplitude.

10. Procédé selon la revendication 9, comprenant en outre :
la détermination d'une vitesse de mouvement dudit observateur de ladite première position à ladite seconde position;
l'affichage d'au moins une vue d'apparence intermédiaire avant l'affichage de ladite seconde vue d'apparence si la vitesse de mouvement est supérieure à un premier seuil de vitesse.

11. Procédé selon la revendication 9 ou 10, dans lequel l'étape de retour comprend en outre l'affichage d'au moins une vue d'apparence intermédiaire avant l'affichage de ladite première vue d'apparence, de telle manière que l'image vidéo passe progressivement de ladite seconde vue d'apparence à ladite première vue d'apparence.

12. Procédé selon l'une quelconque des revendications 9 à 11, dans lequel :
l'étape de pistage comprend en outre le pistage de la position de l'observateur dans au moins deux dimensions;
l'étape de détermination d'une amplitude de mouvement comprend en outre la détermination d'une amplitude de mouvement suivant au moins un premier axe et un second axe et ;
l'étape d'affichage de ladite image vidéo avec une seconde vue d'apparence comprend en outre la sélection de ladite seconde vue d'apparence en fonction de ladite amplitude de mouvement suivant ledit premier axe et ledit second axe.

13. Procédé selon l'une quelconque des revendications 9 à 12, comprenant en outre :
la formation d'une pluralité de vues d'apparence de ladite image vidéo avant l'affichage de ladite première vue d'apparence et ;
la mémorisation de ladite pluralité de vues d'apparence.

14. Procédé selon la revendication 13, dans lequel l'étape d'affichage d'une seconde vue d'apparence comprend en outre la sélection de ladite seconde vue d'apparence parmi une pluralité de vues d'apparence mémorisées.

15. Procédé selon la revendication 14, dans lequel l'étape de formation d'une pluralité de vues d'apparence comprend en outre :
la séparation de ladite image vidéo en au moins deux parties comprenant une partie proche et une partie éloignée et ;
la formation d'une pluralité de vues d'apparence de la partie proche et une vue d'apparence de la partie éloignée.

16. Procédé selon la revendication 15, dans lequel :
l'étape d'affichage d'une première vue d'apparence comprend en outre la formation de ladite première vue d'apparence en combinant ladite vue d'apparence de la partie éloignée avec une première vue d'apparence de la partie proche et ;
l'étape d'affichage d'une seconde vue d'apparence comprend en outre la formation de ladite seconde vue d'apparence en combinant ladite vue d'apparence de la partie éloignée avec une seconde vue d'apparence de la partie proche.

17. Procédé selon l'une quelconque des revendications 14 à 16, dans lequel au moins une de ladite pluralité de vues d'apparence est mémorisée dans un format comprimé.

18. Procédé selon l'une quelconque des revendications 13 à 17, dans lequel l'étape d'affichage d'une seconde vue d'apparence comprend en outre le calcul d'au moins une partie de ladite seconde vue d'apparence en réponse à ladite amplitude de mouvement provenant de ladite étape de détermination d'une amplitude de mouvement, ladite étape de calcul étant exécutée après ladite étape d'affichage de la première vue d'apparence.

19. Support de mémoire non-volatile comportant des variations d'une propriété physique dudit support de mémoire qui définissent des instructions ou des indications pour afficher une image vidéo virtuelle en trois dimensions, comprenant :
des moyens pour afficher une première vue d'apparence d'une image vidéo;
des moyens pour poursuivre la position d'un observateur (115) par rapport à une surface de visualisation dudit dispositif d'affichage vidéo (101);
des moyens pour déterminer une amplitude de mouvement d'une première position dudit observateur à une seconde position dudit observateur (115);
**caractérisé en ce qu'**il comprend en outre :
des moyens pour afficher une seconde vue d'apparence de ladite image vidéo si le mouvement détecté dans la phase de détermination dépasse un premier seuil d'amplitude;
des moyens pour répéter lesdites étapes de pistage et de détermination ; et
des moyens pour ramener ladite image vidéo à ladite première vue d'apparence si le mouvement additionnel détecté par ladite étape de détermination répétée est inférieur audit second seuil d'amplitude.
